# EUROPÄISCHE PATENTSCHRIFT

(11) **EP 1 101 665 B1**
(45) Veröffentlichungstag und Bekanntmachung des Hinweises auf die Patenterteilung: **23.05.2007**
(21) Anmeldenummer: 00125150.3
(22) Anmeldetag: 17.11.2000
(51) Int. Cl.: B60R 21/20

(54) **Fahrzeuginnenverkleidung, Verfahren zum Öffnen einer Airbagklappe in einer solchen Fahrzeuginnenverkleidung und Herstellungsverfahren für eine Fahrzeuginnenverkleidung**
Vehicle inner panel, process for opening an airbag cover in such a panel and process for manufacturing a vehicle inner panel
Garniture intérieure de véhicule, procédé d'ouverture d'un couvercle de coussin gonflable dans une telle garniture et procédé de fabrication pour une garniture intérieure de véhicule

(30) Priorität: 17.11.1999 DE 29920161 U
(43) Veröffentlichungstag der Anmeldung: 23.05.2001
(73) Patentinhaber: Volkswagen Aktiengesellschaft, 38436 Wolfsburg (DE)
(72) Erfinder: Müller, Olaf, 65428 Rüsselsheim (DE)
(74) Vertreter: Lindner, Manfred Klaus

(56) Entgegenhaltungen:
- EP-A- 0 867 346
- EP-A- 1 059 210
- DE-A- 19 726 878
- DE-U- 29 721 642

## Beschreibung

Die Erfindung betrifft eine Fahrzeuginnenverkleidung nach dem Oberbegriff des Anspruchs 1, ein Verfahren zum Öffnen einer Airbagklappe in einer solchen Fahrzeuginnenverkleidung nach dem Oberbegriff des Anspruchs 11 sowie Herstellungsverfahren für eine Fahrzeuginnenverkleidung.

Insbesondere betrifft die Erfindung eine Fahrzeuginnenverkleidung in Kombination mit einer Airbagvorrichtung, wobei eine Airbagklappen-Bewegungstechnik vorgesehen ist, die die Klappe in ein Airbagmodul hinein oder hinter, d.h. von einem Insassen weg, die Fahrzeuginnenverkleidung zieht. Dafür ist beispielsweise aus der früheren internationalen Patentanmeldung WO 99/61288 desselben Inhabers eine Fahrzeuginnenverkleidung mit einer Trägerstruktur bekannt, die von einer Schaumschicht und darüber einer Sichtseitenschicht bedeckt ist und einen Innenverkleidungsträger, in dem eine Airbagauslaßöffnung gebildet ist, und wenigstens einen in letzterer angeordneten Airbagklappenträger enthält, der zumindest im wesentlichen formstabil ist und zusammen mit zugeordneten Bereichen der Schaumschicht und Sichtseitenschicht eine Airbagklappe bildet, die eine Zugseite aufweist, an der eine Öffnungsmechanik angreift, die mit dem Airbagklappenträger zumindest an der Zugseite und mit der Sichtseitenschicht im Bereich des Airbagklappenträgers fest verbundene Zugmittel enthält, mittels denen die Airbagklappe zum Freigeben der Airbagauslaßöffnung vom einem Fahrzeuginsassen weg zumindest im wesentlichen hinter die Fahrzeuginnenverkleidung ziehbar ist.

Eine solche Ausgestaltung einer Fahrzeuginnenverkleidung ist grundsätzlich vorteilhaft, da damit auf einfache und zuverlässige Weise in Kombination mit einer entsprechenden Airbagvorrichtung ein Rückziehen einer Airbagklappe vor einem Austritt des zugehörigen Airbags ermöglicht wird, der dadurch weniger aggressiv austreten kann, wodurch Gefährdungen der eigentlich mit dem Airbag zu schützenden Insassen durch den Airbag selbst vermieden oder zumindest drastisch vermindert werden.

In der nicht vorveröffentlichten EP 1 059 210 A2 sind eine Airbagvorrichtung und ein Aurlöseverfahren dafür beschrieben und gezeigt. Daraus geht eine Fahrzeuginnenverkleidung mit einer Trägerstruktur her vor, die von einer Schaumschicht und darüber einer Sichtseitenschicht bedeckt ist und einen Innenverkleidungsträger in dem eine Airbagauslassöffnung gebildet ist, und wenigstens einen in letzterer angeordneten Airbagklappenträger enthält, der zumindest im wesentlichen formstabil ist und zusammen mit zugeordneten Bereichen der Schaumschicht und Sichtseitenschicht eine Airbagklappe bildet, die eine Zugseite aufweist, die einem Rand der Airbagauslassöffnung benachbart angeordnet ist und an der eine Öffnungsmechanik angreift, die mit dem Airbagklappenträger zumindest an der Zugseite und mit der Sichtseitenschicht im Bereich des Airbagklappenträgers fest verbundene Zugmittel enthält, mittels denen die Airbagklappe zum Freigeben der Airbagauslassöffnung vom einem Fahrzeuginsassen weg auf der Zugseite zumindest im wesentlichen hinter die Fahrzeuginnenverkleidung ziehbar ist. Weiter ist bei einzelnen Ausführungsbeispielen vorgesehen, dass der Airbagklappenträger auf seiner Zugseite einen in Richtung hinter die Fahrzeuginnenverkleidung verbiegbaren Verformungsbereich (12) enthält, und dass wenigstens eine verformbase Abdecklage entsprechend der Sichtseitenschicht an einem Halterandbereich der Airbagauslassöffnung fixiert ist. Dadurch wird zumindest weitgehend vermieden, dass beim Öffnen der Airbagklappe entstehende Teilchen durch die Airbagauslassöffnung ins Fahrzeuginnere gelangen können.

Mit der vorliegenden Erfindung wird das Ziel angestrebt, eine weitere Verbesserung bei der Vermeidung eines Ablösens der Sichtseitenschicht von der Schaumschicht und letztlich dem Airbagklappenträger, was mit einem Ablösen der Zugmittel von der Sichtseitenschicht einher gehen und auch die Funktionssicherheit beeinträchtigen würde, beim Zurückziehen der Airbagklappe zu schaffen.

Dieses Ziel wird mit einer Fahrzeuginnenverkleidung nach dem Anspruch 1, einem Verfahren zum Öffnen einer Airbagklappe in einer solchen Fahrzeuginnenverkleidung nach dem Anspruch 11 sowie Herstellungsverfahren für eine Fahrzeuginnenverkleidung nach dem Anspruch 12 erreicht.

Bevorzugte und vorteilhafte Weiterbildungen der Erfindung sind in den jeweils abhängigen Ansprüchen angegeben und ergeben sich ferner aus dem gesamten Offenbarungsgehalt der vollständigen vorliegenden Unterlagen.

Die vorliegende Erfindung stellt insbesondere Alternativen, Ergänzungen und Erweiterungen sowie Verbesserungen der Airbagklappen-Bewegungstechnik dar, die die Klappe in das Modul hineinzieht und die in der internationalen Patentanmeldung WO 99/61288 desselben Inhabers offenbart ist. Insbesondere wird durch die vorliegende Erfindung eine Fahrzeuginnenverkleidung mit einem Airbagdeckel oder einer Airbagklappe geschaffen, der/die beispielsweise in einem Armaturentafelkörper integriert ist, als eine alternative oder verbesserte Technik bei der Öffnung eines Airbagdeckels in ein Airbagmodul hinein. Die weiteren auf den vorliegenden Inhaber zurückgehenden älteren deutschen Patentanmeldungen DE 197 12 782 A1, DE 197 26 878 A1 und DE 197 33 896 A1 sowie europäische Patentanmeldung EP 867346 A1 befassen sich allgemein mit einer Airbagvorrichtung sowie einem Auslöseverfahren dafür, wozu die vorliegende Erfindung ebenfalls Alternativen, Ergänzungen und Erweiterungen sowie Verbesserungen darstellt, insbesondere bezüglich der Bauart der Airbagvorrichtung samt Fahrzeuginnenverkleidung und Auslösesteuerung der Airbagklappe und im speziellen der Ausgestaltung und der Funktion der Airbagklappe. Diesbezüglich ist der vollständige Offenbarungsgehalt sämtlicher vorstehend angegebenen älteren Anmeldungen zur Vermeidung bloßer Wiedergaben in den vorliegenden Unterlagen in letztere hiermit durch die Bezugnahmen vollumfänglich aufgenommen.

Durch die Erfindung wird somit eine Fahrzeuginnenverkleidung mit einer Trägerstruktur geschaffen, die von einer Schaumschicht und darüber einer Sichtseitenschicht bedeckt ist und einen Innenverkleidungsträger, in dem eine Airbagauslassöffnung gebildet ist, und wenigstens einen in letzterer angeordneten Airbagklappenträger enthält, der zumindest im wesentlichen formstabil ist und zusammen mit zugeordneten Bereichen der Schaumschicht und Sichtseitenschicht eine Airbagklappe bildet, die eine Zugseite aufweist, die einem Rand der Airbagauslassöffnung benachbart angeordnet ist und an der eine Öffnungsmechanik angreift, die mit dem Airbagklappenträger zumindest an der Zugseite und mit der Sichtseitenschicht im Bereich des Airbagklappenträgers fest verbundene Zugmittel enthält, mittels denen die Airbagklappe zum Freigeben der Airbagauslassöffnung vom einem Fahrzeuginsassen weg auf der Zugseite zumindest im wesentlichen hinter die Fahrzeuginnenverkleidung ziehbar ist, wobei der Airbagklappenträger auf seiner Zugseite einen in Richtung hinter die Fahrzeuginnenverkleidung verbiegbaren Verformungsbereich enthält und wobei die Airbagklappe und die Zugmittel derart angeordnet und kombiniert sind, dass die Airbagklappe wenn mittels der Zugmittel daran gezogen wird, vollständig einschließlich des ihr zugeordneten Bereiches der Sichtseitenschicht über ihre gesamte Umfangsform aus der Airbagauslassöffnung gerissen und zumindest im wesentlichen hinter die Fahrzeuginnenverkleidung gezogen wird.

Für das Verbiegen des Verformungsbereichs ist verglichen mit dem Einzug der gesamten Airbagklappe hinter die Fahrzeuginnenverkleidung relativ wenig Kraft erforderlich, so dass die Kraftkomponente der Öffnungsmechanik im wesentlichen senkrecht zum Airbagklappenträger und zu Sichtseitenschicht/Zugmittel/Schaumschicht ein Ablösen der letzteren voneinander und vom Airbagklappenträger nicht bewirken wird. Nachdem im Verlauf des Betriebs der Öffnungsmechanik der Verformungsbereich in die Zugrichtung gebogen wurde, zieht die Öffnungsmechanik nicht mehr senkrecht zum Airbagklappenträger und zur Sichtseitenschicht/Schaumschicht, sondern zumindest mit einer Kraftkomponente in bemerkenswertem Umfang wenigstens annähernd parallel zum Airbagklappenträger und zu Sichtseitenschicht/Zugmittel/Schaumschicht. Diese Kraftkomponente kann zum Ablösen von Sichtseitenschicht, Zugmittel, Schaumschicht und Airbagklappenträger voneinander keinen Beitrag leisten, so dass durch die erfindungsgemäße Bauart ein solches Ablösen weitestgehend oder sogar vollständig vermieden wird, und die in Zugrichtung wirkende Kraft in die relativ große Gesamtfläche des Zusammenbaus von Airbagklappenträger, Schaumschicht, Zugmittel und Sichtseitenschicht eingeleitet wird und daran scherend zieht.

Bei vorzugsweisen Weiterbildungen der Erfindung ist vorgesehen, dass die Zugmittel durch Gewebematerial gebildet sind, und/oder dass die Sichtseitenschicht und/oder die Schaumschicht entsprechend der Umfangsform der Airbagauslaßöffnung und/oder ggf. einzelner Airbagklappen Materialschwächungen enthält. Gewebematerial eignet sich besonders gut für eine zuverlässige Kraft- und Bewegungsübertragung. Materialschwächungen erleichtern und definieren das Reißen von Sichtseitenschicht bzw. Schaumschicht.

Eine bevorzugte weitere Ausgestaltung der erfindungsgemäßen Fahrzeuginnenverkleidung besteht darin, dass die Zugmittel und ggf. das Gewebematerial an der Zugseite des Airbagklappenträgers mittels einer dort formschlüssig befestigten Leiste oder allgemein Halteeinrichtungen fixiert sind, wodurch der Zusammenbau der Fahrzeuginnenverkleidung erleichtert wird. Dies kann weiter dadurch mit Vorteil fortgebildet werden, dass die Leiste auf die Zugseite des Airbagklappenträgers aufgeschnappt ist, und/oder dass die Zugmittel und ggf. das Gewebematerial mittels an der Leiste vorgesehenen Dornen oder Haken, die in die Zugmittel und ggf. das Gewebematerial eingreifen und in der Zugseite aufgenommen sind, fixiert sind. Damit wird der Zusammenbau der erfindungsgemäßen Fahrzeuginnenverkleidung weiter erleichtert.

Mit Vorzug stützen sich der Airbagklappenträger auf seiner Zugseite und/oder der seiner Zugseite gegenüberliegenden Seite an einer benachbarten Seite der Airbagauslaßöffnung und/oder zwei Airbagklappenträger an ihren einander gegenüberliegenden Seiten aneinander formschlüssig, vorzugsweise mittels einer Nut-und-Feder-Kombinationen ab. Alternativ oder zusätzlich dazu kann vorgesehen sein, dass sich der Airbagklappenträger an seinen bezüglich seiner Zugseite und der seiner Zugseite gegenüberliegenden Seite übrigen Seiten vorzugsweise mittels Nasen am Rand der Airbagauslaßöffnung abstützt. Diese Varianten sind nicht nur für die Stabilität des Zusammenbaus aus Innenverkleidungsträger und Airbagklappenträger vorteilhaft, sondern erleichtern auch die Montage des/der Airbagklappenträger(s) in der Airbagauslaßöffnung in dem Innenverkleidungsträger.

Eine weitere erfindungsgemäße Möglichkeit, die Herstellung der Fahrzeuginnenverkleidung zu erleichtern besteht darin, dass die Airbagauslaßöffnung von einem Hilfsrahmen umgeben ist, der in dem Innenverkleidungsträger angeordnet ist und den wenigstens einen Airbagklappenträger aufnimmt. Dieser Hilfsrahmen erleichtert nicht nur die Positionierung und Halterung von Airbagklappenträger(n) in der Airbagauslaßöffnung in dem Innenverkleidungsträger, sondern ermöglicht auch eine besonders einfache, schnelle und sichere Fixierung der Zugmittel an der Zugseite des/der Airbagklappenträger(s). Eine vorteilhafte Weiterbildung zur Vereinfachung der Produktion besteht ferner darin, dass der Hilfsrahmen mittels Abstandhaltern bezüglich der Sichtseitenschicht positioniert ist.

Die Krafteinleitung und entsprechende Wirkung davon in der/den Airbagklappe(n) für den erfindungsgemäß angestrebten und erhaltenen Effekt kann weiter dadurch verbessert werden, dass der Innenverkleidungsträger oder ggf. der Hilfsrahmen im der Zugseite des Airbagklappenträgers benachbarten Bereich einen in Richtung hinter die Fahrzeuginnenverkleidung verbiegbaren Verformungsbereich enthält. Durch diese Ausgestaltung wird das Verbiegen des Verformungsbereichs an der Zugseite des Airbagklappenträgers in der Zugrichtung von Beginn der Operation an weiter erleichtert.

Vorzugsweise sind die jeweils vorhandenen Verformungsbereiche derart ausgestaltet, dass sie wenigstens eine linienartige Materialdünnstelle oder einen gewellten oder zieharmonikaartigen Biegebereich enthalten.

Weiterhin wird das Ziel der vorliegenden Erfindung mit einem Herstellungsverfahren für eine Fahrzeuginnenverkleidung mit wenigstens einer Airbagklappe zum Verschließen und Freigeben einer Airbagauslaßöffnung erreicht wobei
- Zugmittel mit der später nicht sichtbaren Seite einer Sichtseitenschicht so verbunden werden, dass ein Angreifen daran nahe eines Randes der Airbagauslassöffnung ermöglicht wird, wodurch eine Zugseite festgelegt wird, und dass bei einem Ziehen an den Zugmitteln die Sichtseitenschicht zuverlässig vollständig zur Zugseite mitgenommen wird,
- schäumendes Material darauf aufgebracht wird,
- ein Innenverkleidungsträger oder ein in die Airbagauslassöffnung passender Hilfsrahmen lagepositioniert auf das noch nicht ausgehärtete schäumende Material aufgesetzt wird,
- die Zugmittel an Halteeinrichtungen fixiert werden, die mit dem Innenverkleidungsträger bzw. dem Hilfsrahmen benachbart der Lage der Zugseite verbunden sind,
- der Airbagklappenträger unter gleichzeitiger Fixierung der Zugmittel an der Zugseite mit den Halteeinrichtungen verbunden und lagepositioniert auf das noch nicht ausgehärtete schäumende Material so aufgesetzt wird, dass ein Verformungsbereich des Airbagklappenträgers auf der Zugseite liegt, und
- das schäumende Material ausgehärtet wird.

Eine Weiterbildung dieses Verfahrens ist dadurch gekennzeichnet, dass bei Verwendung eines in die Airbagauslassöffnung passenden Hilfsrahmens vor dem Aushärten des schäumenden Materials ein Innenverkleidungsträger lagepositioniert auf das noch nicht ausgehärtete schäumende Material aufgesetzt wird, so dass der Hilfsrahmen in der Airbagauslassöffnung liegt.

Beide Varianten lassen sich vorteilhaft dadurch weiterbilden, daß als Halteeinrichtungen Leisten mit Dornen oder Haken zum Fixieren der Zugmittel eingesetzt werden.

Anhand der nachfolgend beschriebenen und in den Zeichnungen dargestellten Ausführungs- und Anwendungsbeispiele wird die Erfindung beispielhaft und nicht beschränkend näher erläutert. In der Zeichnung zeigen:
Fig. 1 ein erstes Ausführungsbeispiele mit einer hinter die Fahrzeuginnenverkleidung einziehbaren Airbagabdeckung mit zwei Airbagklappen in einer schematischen teilweisen Frontansicht,
Fig. 2 in einer schematischen Schnittansicht das erste Ausführungsbeispiele der Fahrzeuginnenverkleidung mit zwei Airbagklappen von Fig. 1 zu einem Zeitpunkt 0 ms bezüglich einer Airbagauslösung nach einem Crash,
Fig. 3 in einer schematischen zur Fig. 2 analogen Schnittansicht das erste Ausführungsbeispiele der Fahrzeuginnenverkleidung mit zwei Airbagklappen von Fig. 1 zu einem Zeitpunkt 2 ms und 3 ms bezüglich einer Airbagauslösung nach einem Crash,
Fig. 4a und 4b je eine Alternative eines in den Innenverkleidungsträger eingeclipsten Airbagdeckel- oder -klappenträger in schematischen Schnittansichten als zweite und dritte Ausführungsbeispiele der Fahrzeuginnenverkleidung,
Fig. 5 ein Detail des dritten Ausführungsbeispiels der Fahrzeuginnenverkleidung gemäß der Fig. 4b in einer schematischen vergrößerten Schnittansicht,
Fig. 6 eine schematische Schnittansicht des dritten Ausführungsbeispiels der Fahrzeuginnenverkleidung gemäß der Fig. 4b in einem realistischen Armaturentafelumfeld,
Fig. 7 eine schematische teilweise Schnittansicht eines vierten Ausführungsbeispiels der Fahrzeuginnenverkleidung mit einem Hilfsrahmen zwischen Innenverkleidungsträger, wie beispielsweise einem Armaturentafelträger, und Airbagdeckel- oder -klappenträger,
Fig. 8 die Situation des vierten Ausführungsbeispiels der Fahrzeuginnenverkleidung gemäß der Fig. 8 wenige Millisekunden nach einer crashbedingten Auslösung der Airbagvorrichtung in einer schematischen teilweisen Schnittansicht analog zur Fig. 7,
Fig. 9 ein Detail des vierten Ausführungsbeispiels der Fahrzeuginnenverkleidung gemäß den Fig. 7 und 8 in einer schematischen vergrößerten Schnittansicht,
Fig. 10 ein Detail des vierten Ausführungsbeispiels der Fahrzeuginnenverkleidung gemäß den Fig. 7 und 8 in einer schematischen perspektivischen Ansicht, wobei eine Folie als Sichtseitenschicht mit einem eingelegten, gegossenen oder geklebten Gewebe als Zugmittel gezeigt sind,
Fig. 11 einen Hilfsrahmen zum vierten Ausführungsbeispiel der Fahrzeuginnenverkleidung gemäß den Fig. 7 und 8 im nicht montierten Zustand in einer schematischen perspektivischen Darstellung,
Fig. 12 Halteeinrichtungen in Form einer Leiste zum vierten Ausführungsbeispiel der Fahrzeuginnenverkleidung gemäß den Fig. 7 und 8 im nicht montierten Zustand in einer schematischen perspektivischen Darstellung,
Fig. 13 zwei Airbagklappenträger zum vierten Ausführungsbeispiel der Fahrzeuginnenverkleidung gemäß den Fig. 7 und 8 im nicht montierten Zustand in einer schematischen perspektivischen Darstellung,
Fig. 14 einen Innenverkleidungsträger mit einer Airbagauslaßöffnung zum vierten Ausführungsbeispiel der Fahrzeuginnenverkleidung gemäß den Fig. 7 und 8 im nicht montierten Zustand in einer schematischen perspektivischen Darstellung, und
Fig. 15 die Montagereihenfolge der Komponenten der Fig. 10 bis 13 in einer schematischen perspektivischen Darstellung.

In den einzelnen Figuren der Zeichnung sind gleiche oder ähnliche oder gleich oder ähnlich wirkende Teile mit denselben Bezugszeichen versehen oder vergleichbar dargestellt, so daß sich Teile sowie deren Kombinationen, Funktionen und Wirkungsweisen für einen Fachmann auch aus der Betrachtung der Figuren der Zeichnung alleine, deren Vergleich und/oder den nachfolgend beschriebenen Angaben ggf. alleine ohne weiteres erschließen, auch wenn keine Bezugnahmen zwischen einzelnen Figuren und/oder zwischen Figuren und Text explizit angegeben oder dargestellt sind.

Im Rahmen der nachfolgenden detaillierten, jedoch lediglich exemplarischen Erläuterung der Erfindung anhand der in den Figuren dargestellten Ausführungsbeispiele wird noch auf einige besonders vorteilhafte Gestaltungen und Effekte der entsprechenden Ausführungen eingegangen.

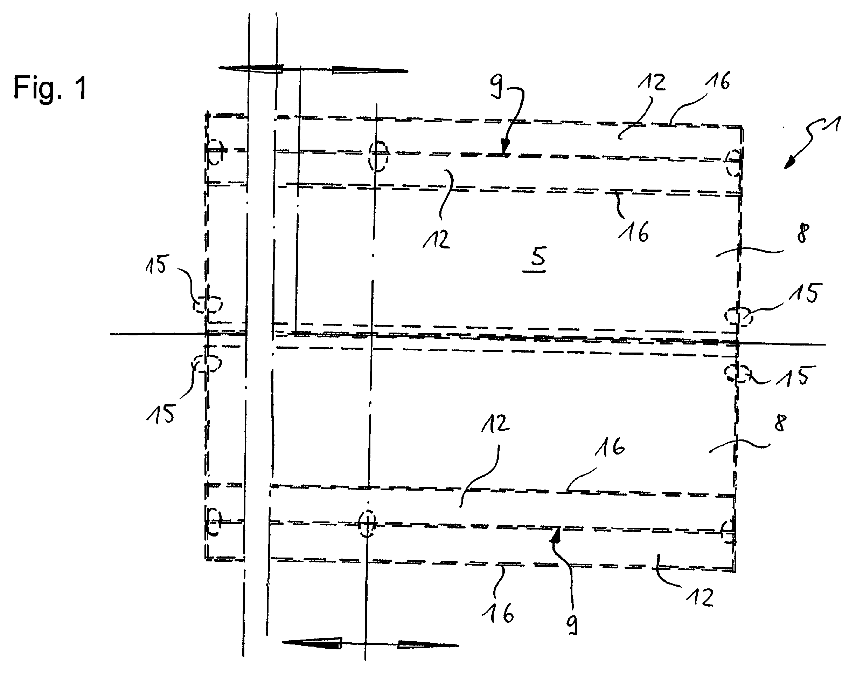

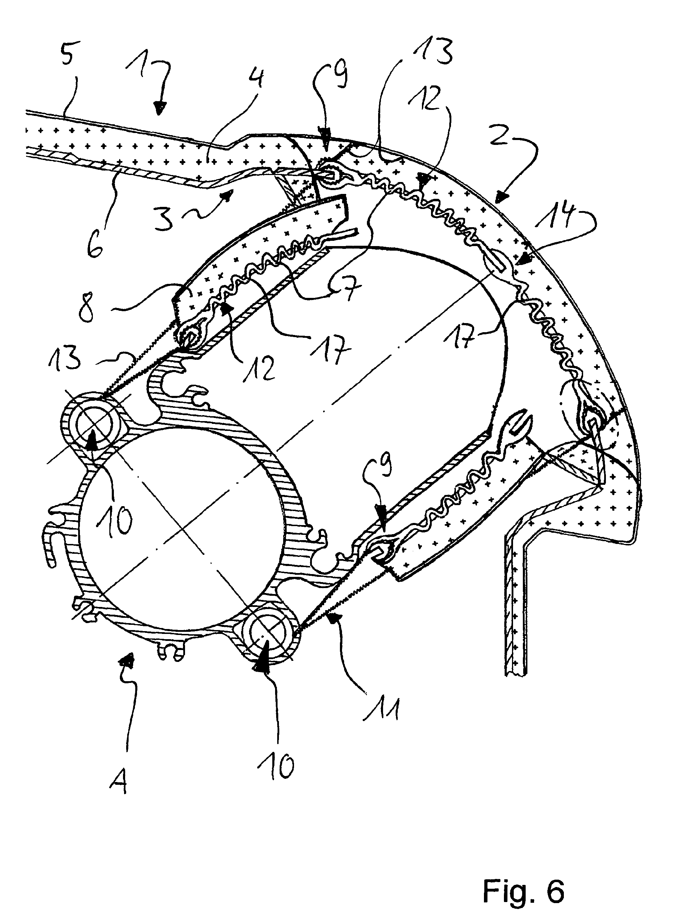

Die Figuren 1, 2 und 3 zeigen in verschiedenen Ansichten und Zuständen ein erstes Ausführungsbeispiel einer Fahrzeuginnenverkleidung 1, in der eine Airbagauslaßöffnung 2 enthalten ist, durch die ein Airbag (nicht gezeigt) einer Airbagvorrichtung A (siehe beispielsweise Fig. 6) auf einen Insassen (nicht dargestellt) zu aus der Fahrzeuginnenverkleidung 1 austreten kann.

Die Fahrzeuginnenverkleidung 1 enthält ferner eine Trägerstruktur 3, die von einer Schaumschicht 4 und darüber einer Sichtseitenschicht 5 in Form einer Folie bedeckt ist und einen Innenverkleidungsträger 6, in dem die Airbagauslaßöffnung 2 gebildet ist, und beim vorliegenden Ausführungsbeispiel zwei in der Airbagauslaßöffnung 2 angeordnete Airbagklappenträger 7 enthält. Jeder Airbagklappenträger 7 ist zumindest im wesentlichen formstabil und bildet zusammen mit zugeordneten Bereichen der Schaumschicht 4 und Sichtseitenschicht 5 eine Airbagklappe 8 bildet. Allgemein gesprochen lassen sich die beiden Airbagklappen 8 als Airbag-Abdeckeinrichtungen bezeichnen, die beispielsweise auch nur eine Airbagklappe oder mehr als zwei Airbagklappen enthalten können.

Jede Airbagklappe 8 weist eine Zugseite 9 auf, an der eine Öffnungsmechanik 10 (siehe beispielsweise Fig. 6) angreift, die mit jedem Airbagklappenträger 7 zumindest an der Zugseite 9 und mit der Sichtseitenschicht 5 im Bereich des Airbagklappenträgers 7 fest verbundene Zugmittel 11, wie beispielsweise Schnüre, enthält. Mittels der Zugmittel 11 können die Airbagklappen 8 zum Freigeben der Airbagauslaßöffnung 2 vom einem Fahrzeuginsassen (nicht gezeigt) weg zumindest im wesentlichen hinter die Fahrzeuginnenverkleidung 1 gezogen werden.

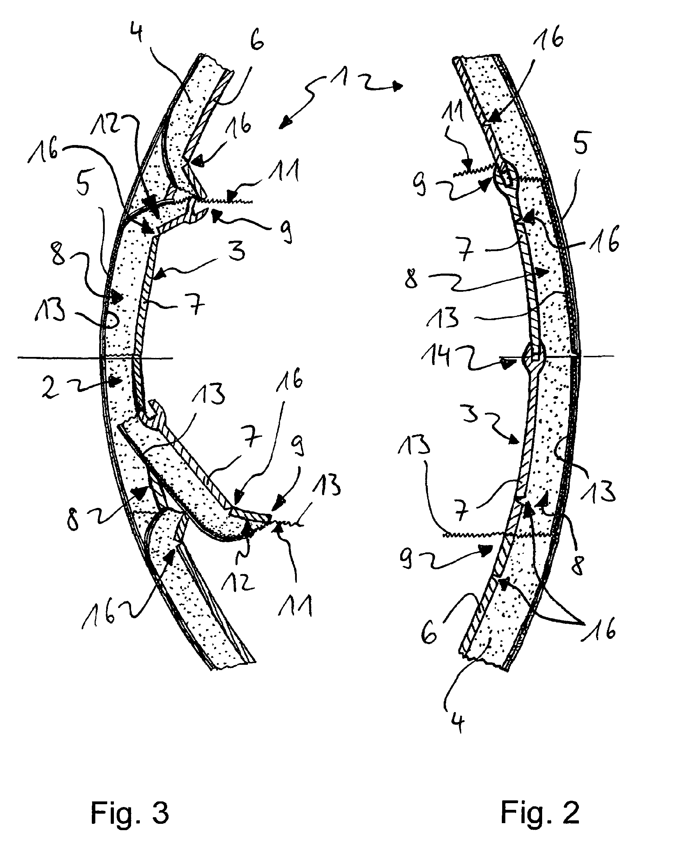

Jeder Airbagklappenträger 7 hat auf seiner Zugseite 9 einen in Richtung hinter die Fahrzeuginnenverkleidung verbiegbaren Verformungsbereich 12. Für das Verbiegen des Verformungsbereichs 12 ist verglichen mit dem Einzug der gesamten Airbagklappe 8 hinter die Fahrzeuginnenverkleidung 1 relativ wenig Kraft erforderlich, so daß die Kraftkomponente der Öffnungsmechanik 10 (siehe beispielsweise Fig. 6) im wesentlichen senkrecht zum Airbagklappenträger 7 und zu Sichtseitenschicht 5 / Zugmittel 9 / Schaumschicht 4 ein Ablösen der letzteren voneinander und vom Airbagklappenträger 7 nicht bewirken wird. Nachdem im Verlauf des Betriebs der Öffnungsmechanik 10 der Verformungsbereich 12 in die Zugrichtung gebogen wurde, wie aus dem Vergleich der Darstellungen in den Fig. 2 und 3 ersichtlich ist, zieht die Öffnungsmechanik 10 nicht mehr senkrecht zum Airbagklappenträger 7 und zur Sichtseitenschicht 5 / Schaumschicht 4, sondern zumindest mit einer Kraftkomponente in bemerkenswertem Umfang wenigstens annähernd parallel zum Airbagklappenträger 7 und zu Sichtseitenschicht 5 / Schaumschicht 4. Diese Kraftkomponente kann zum Ablösen von Sichtseitenschicht 5, Zugmittel 9, Schaumschicht 4 und Airbagklappenträger 7 voneinander keinen Beitrag leisten, so daß durch die erfindungsgemäße Bauart ein solches Ablösen weitestgehend oder sogar vollständig vermieden wird, und die in Zugrichtung wirkende Kraft in die relativ große Gesamtfläche des Zusammenbaus von Airbagklappenträger 7, Schaumschicht 4, Zugmittel 9 und Sichtseitenschicht 5 eingeleitet wird und daran scherend zieht.

Bei dem in den Fig. 1 bis 3 gezeigten Ausführungsbeispiel sind die Zugmittel 9 durch Gewebematerial 13 gebildet sind. Beide Airbagklappenträger 7 sind bei 14 miteinander nut- und federartig oder allgemein formschlüssig verbunden oder ineinander geschoben, was der Abstützung während der Montage zur Herstellung der Fahrzeuginnenverkleidung und im Gebrauch dient. Eine solche formschlüssige Abstützung oder Verbindung 14 kann auch zwischen einem Airbagklappenträger 7 und dem Rand der Airbagauslaßöffnung 2 in dem Innenverkleidungsträger 6 vorgesehen sein, wie in den Fig. 2 und 3 jeweils oben gezeigt ist. Die Verbindungen 14 gehen beim ziehenden Öffnen der Airbagklappen 8 gelenkartig auf. Weiterhin sind die Airbagklappenträger 7 im übrigen am Rand der Airbagauslaßöffnung 2 mittels Nasen 15, die auch als Führungsnasen zu bezeichnen sind, abgestützt und geführt, wie in der Fig. 1 angedeutet ist. Diese ebenfalls gelenkige Abstützung dient zur Positionierung bei der Fertigung und zum Aufreißen der Sichtseitenschicht 5 und der Schaumschicht 4 bei einem Crash mit geringstmöglicher Kraft.

Die Figuren 1, 2 und 3 zeigen Knickstellen 16 in Form von linienartigen (siehe Fig. 1) Materialdünnstellen und somit Verformungsbereiche 12 im Innenverkleidungsträger 6 und im Airbagdeckel- oder -klappenträger 7. Die Wirkung der Knickstellen 16 bzw. Verformungsbereiche 12 besteht darin, daß bei einem Crash beim Zug des Gewebematerials 13 an der Folie der Sichtseitenschicht 5 an den Knickstellen 16 Verformungsbereiche 12 der Träger 6 und 7 abgeknickt oder abgebogen werden und damit die Folie der Sichtseitenschicht 5 auf dem Schaum der Schaumschicht 4 und den Trägern 6 und 7 derart umgebogen wird, daß kein Abschälen des Gewebematerials 13 der Zugmittel 9 an der Folie der Sichtseitenschicht 5 entstehen kann, sondern daß das Gewebematerial 13 großflächig an der Folie der Sichtseitenschicht 5 scherend zieht. Damit wird einem Abreißen des Gewebematerials 13 an der Folie der Sichtseitenschicht 5 weitgehend entgegengewirkt, da das Gewebematerial 13 nicht mehr im rechten Winkel zur Zugrichtung der Zugmittel 9 von der Sichtseitenschicht 5 abgeschält wird.

Die Fig. 2 und 3 zeigen den Zustand der Fahrzeuginnenverkleidung 1 bei 0 ms, bei ca. 2 ms und bei ca. 3 ms nach einer Airbagauslösung infolge eines Crashs.

Bezüglich der nachfolgend beschriebenen Ausführungsbeispiele und Figuren werden zur Vermeidung von Wiederholungen nur mehr solche Merkmale beschrieben, die bisher noch nicht oder in anderer Ausgestaltung erläutert wurden. Bereits behandelte Merkmale und Ausgestaltungen sind durch entsprechende Bezugszeichen zuzuordnen und aus dem vorstehenden Text ohne weiteres verständlich.

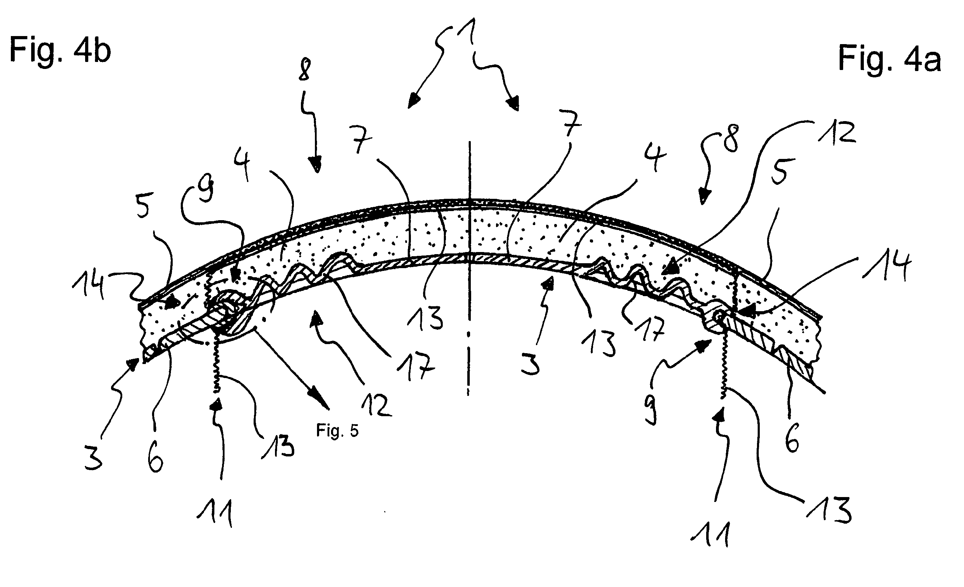

Die Fig. 4a zeigt ein zweites Ausführungsbeispiel der Fahrzeuginnenverkleidung 1. An Stelle der Knickstelle 16 des Verformungsbereichs 12 des/der Airbagklappenträger(s) 7 ist eine Wellen- oder Zieharmonika-Ausbildung 17 zur Schaffung eines Biegebereiches mit derselben Wirkung beim Öffnen der Airbagklappe 8 vorgesehen. Diese Ausgestaltung hat ferner den Vorteil, daß der/die Airbagklappenträger 7 auf Grund der Elastizität der Wellen- oder Zieharmonika-Ausbildung 17 zur Montage in der Airbagauslaßöffnung 2 leicht in der Längsrichtung des/der Airbagklappenträger(s) 7 zum Einstecken des letzteren am Rand der Airbagauslaßöffnung 2 verkürzt, gestaucht oder zusammengedrückt und eingeclipst werden kann/können und dann stabil positioniert ist/sind.

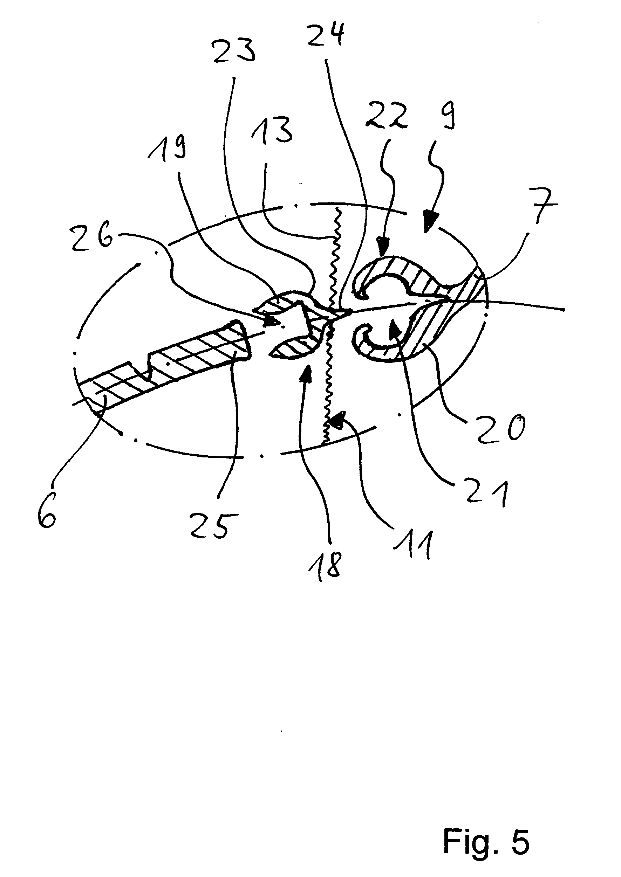

Eine Weiterbildung davon ist als drittes Ausführungsbeispiel der Fahrzeuginnenverkleidung 1 in den Fig. 4b, 5 und 6 gezeigt. Wie insbesondere in der vergrößerten und auseinandergezogenen Darstellung eines teilweisen Querschnittes in der Fig. 5 zu erkennen ist, sind zwischen dem Innenverkleidungsträger 6 und dem Airbagklappenträger 7 Halteeinrichtungen 18 vorgesehen. Diese Halteeinrichtungen 18 sind im vorliegenden dritten Ausführungsbeispiel durch eine Leiste 19 gebildet, die in dem Zugseitenende 20 des Airbagklappenträgers 7 in eine entsprechende Haltenut 21 einsetzbar ist und dort durch eine Klammerausbildung 22, die beispielsweise widerhakenartig wirken kann, gehalten werden kann.

Die Leiste 19 hat auf ihrem Rücken 23, mit dem voraus sie in die Haltenut 21 eingesetzt werden kann, eine Mehrzahl von Dornen, Stiften oder Haken 24, von denen in der Schnittdarstellung der Fig. 5 nur ein Dorn 24 zu sehen ist. Wird das Gewebematerial 13 der Zugmittel 9 vor dem Einsetzen der Leiste 19 in die Haltenut 21 zwischen die Leiste 19 und die Haltenut 21 gelegt, so wird es beim Einsetzen der Leiste 19 in die Haltenut 21 in letztere mit hinein gedrückt und dadurch schon festgeklemmt. Dabei drücken sich aber ferner die Dorne, Stifte oder Haken 24 in das Gewebematerial 13 und fixieren dieses noch fester und dauerhafter. Für die Dorne, Stifte oder Haken 24 sind vorzugsweise Aufnahmeräume oder eine entsprechende Ausgestaltung des Bodens der Haltenut 21 in letzterer vorgesehen.

Beim Zusammenbauen von Innenverkleidungsträger 6 und Airbagklappenträger 7 wird so vorgegangen, daß die Leiste 19 auf den Rand 25 der Airbagauslaß- oder -trittsöffnung 2 am Innenverkleidungsträger 6 mit einer in der Leiste 19 auf der gegenüberliegenden Seite des Rückens 23 enthaltenen Stecknut 26 aufgesteckt wird. Danach wird das Gewebematerial 13 benachbart den Dornen 24 positioniert. Alternativ können diese Dornen oder Spitzen 24 auch als Haken ausgeführt werden (nicht gezeigt), um ein Herausrutschen des Gewebematerials 13 zu verhindern. Schließlich wird der Airbagklappenträger 7 mit seiner Haltenut 21 auf den Rücken 23 der Leiste 19 aufgesteckt. Wegen des festeren Halts der Leiste 19 in der Haltenut 21 auf Grund der klammerartigen Ausgestaltung der letzteren im Vergleich zum Halt der Stecknut 26 auf dem Rand 25 der Airbagaustritts- oder -auslaßöffnung 2 am Innenverkleidungsträger 6 löst sich die Leiste 19 bei einer Zugbeanspruchung an dem Gewebematerial 13 von dem Rand 25 der Airbagaustrittsöffnung 2 am Innenverkleidungsträger 6. Die Verbindung der Leiste 19 mit dem Airbagklappenträger 7 bleibt erhalten. Somit wird das Gewebematerial 13 einmalig zwischen der Haltenut 21 und der Leiste 19 verhakt und ist danach nicht mehr lösbar. Zweck dieser Technik ist es, daß bei Zug am Gewebematerial 13 nach einer crashbedingten Auslösung der Airbagvorrichtung zuerst die volle Kraft auf den Armaturentafel- oder Innenverkleidungsträger 6 und Airbagdeckel- oder -klappenträger 7 geht. Beide Träger knicken an ihren Kanten oder genauer Verformungsbereichen 12 ab und der Verbund aus Leiste 19 mit Airbagklappenträger 7 mit dem eingehängten Gewebematerial 13 löst sich vom Innenverkleidungs- oder Armaturentafelträgerpunkt. Das an der Folie der Sichtseitenschicht 5 angegossene oder angeklebte Gewebematerial 13 braucht nur noch die Folie der Sichtseitenschicht 5 und die Schaumschicht 4 den Trägern 6 und 7 folgend umzubiegen. Durch die hierdurch entstehenden Wegverlängerungen reißt die wie heute üblich eingeschnittene Folie der Sichtseitenschicht 5.

Eine Darstellung des dritten Ausführungsbeispiels in einer realistischen Umgebung zusammen mit der Airbagvorrichtung A ist in der Fig. 6 gezeigt, wobei die Stellung der zwei eingesetzten Airbagklappen 8 vor einer Auslösung der Airbagvorrichtung A und nach vollständiger Auslösung der Airbagvorrichtung A gezeigt ist. Die Fig. 6 enthält auch eine beispielhafte und schematische Darstellung einer Öffnungsmechanik 10.

Nachfolgend wird der Grundgedanke der Erfindung im Rahmen der Erläuterung eines vierten Ausführungsbeispiels eingesetzt bei einer Fahrzeuginnenverkleidung 1, wie beispielsweise einer Armaturentafel mit sog. "offener Schäumung". "Offene Schäumung" bedeutet Eingabe des Schaummaterials in die eingelegte Folie der Sichtseitenschicht 5. Danach wird der Airbagklappenträger 7 aufgesetzt. Der Schaum "quillt" dabei in den Zwischenraum. Hierzu ist ein anderer Aufbau der Komponenten vorteilhaft.

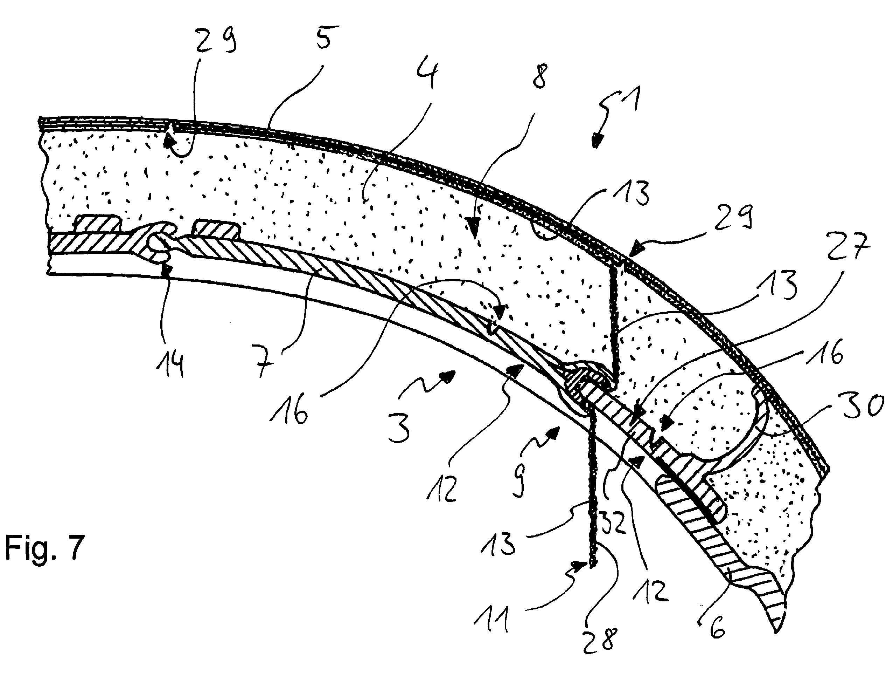

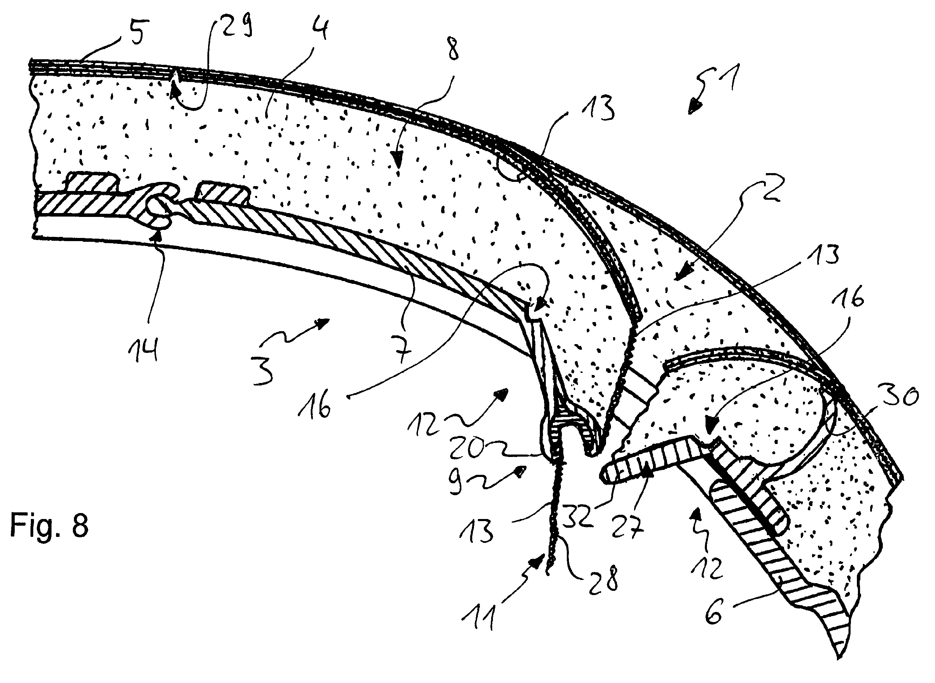

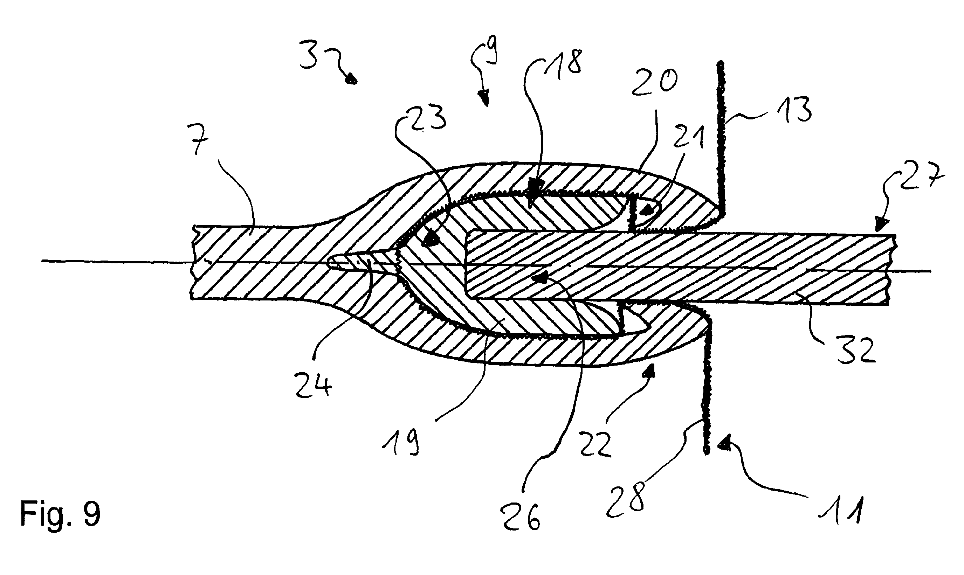

Die Fig. 7 bis 9, zeigen im Schnitt einen Hilfsrahmen 27 zwischen dem Airbagklappenträger 7 und dem Innenverkleidungsträger 6. Die Fig. 7 zeigt die Stellung der Airbagklappe 8 vor einer Auslösung der Airbagvorrichtung A (siehe Fig. 6), und die Fig. 8 zeigt die Stellung der Airbagklappe 8 wenige Millisekunden nach einer Auslösung der Airbagvorrichtung A (siehe Fig. 6). Die Knickstellen 16 der Verformungsbereich 12 sowohl des Airbagklappenträgers 7, als auch des Innenverkleidungsträgers 6 sind durch Kerben in den jeweiligen Materialien dieser Bauteile gebildet. Die Fig. 9 zeigt als vergrößerte Einzelheit, daß auf den Hilfsrahmen 27 eine Leiste 19 mit zahlreichen Spitzen oder Dornen 24 aufgesteckt ist, in die das Gewebematerial 13 der Zugmittel 9 "eingesteckt" ist. im übrigen ist diese Ausgestaltung analog zum dritten Ausführungsbeispiel. Der Airbagklappenträger 7 hat, wie auch bereits in der Fig. 5 gezeigt ist, widerhakenförmige Vorderkanten für eine Klammerwirkung. Nach dem Aufstecken des Airbagklappenträgers 7 auf die Leiste 19 mit dem Gewebematerial 13 als Zwischenlage sind beide Teile nicht mehr trennbar, d.h. das Gewebematerial 13 verteilt seine Zugkraft auf den Airbagklappenträger 7 und die Folie der Sichtseitenschicht 5.

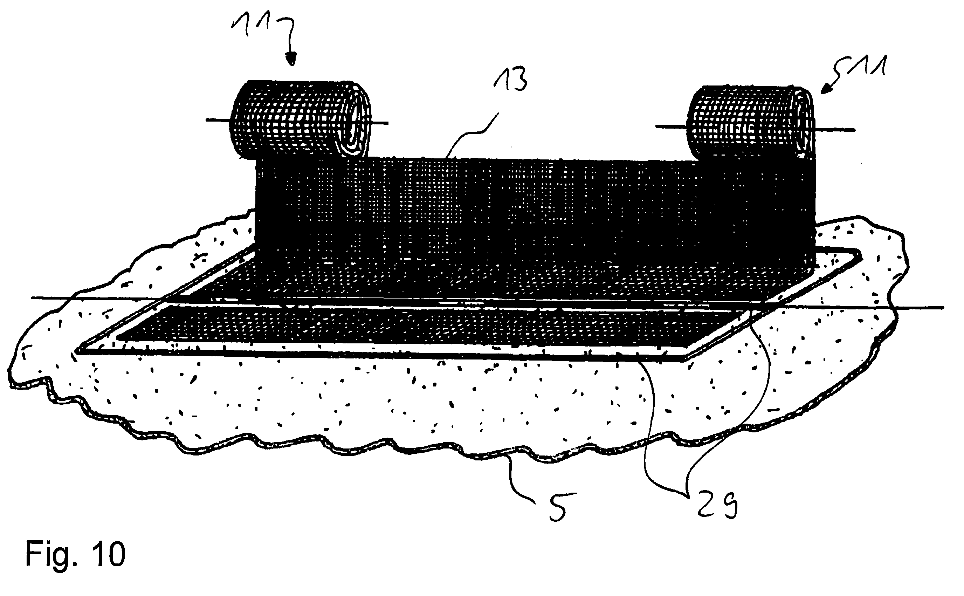

Die Fig. 10 zeigt als Ausschnitt die Folie der Sichtseitenschicht 5 mit dem eingelegten, gegossenen oder geklebten Gewebematerial 13. Vorteilhafterweise wird das durch Beschichten steif gemachte Gewebematerial 13 im ca. rechten Winkel zur Folie der Sichtseitenschicht 5 aufgestellt. Evtl. werden dazu Zugbänder 28 aus Gewebematerial 13 aufgerollt. In dieser Lage wird das Gewebematerial 13 auch mit der Folie der Sichtseitenschicht 5 verbunden. Weiter zeigt das Bild Materialschwächungen 29 in Form von z.B. Einschnitten in der Folie der Sichtseitenschicht 5 rund um die Kontur der Airbagaustrittsöffnung 2 und zwischen den Gewebematerialhälften entsprechend zwei zum Einsatz kommenden Airbagklappen 8.

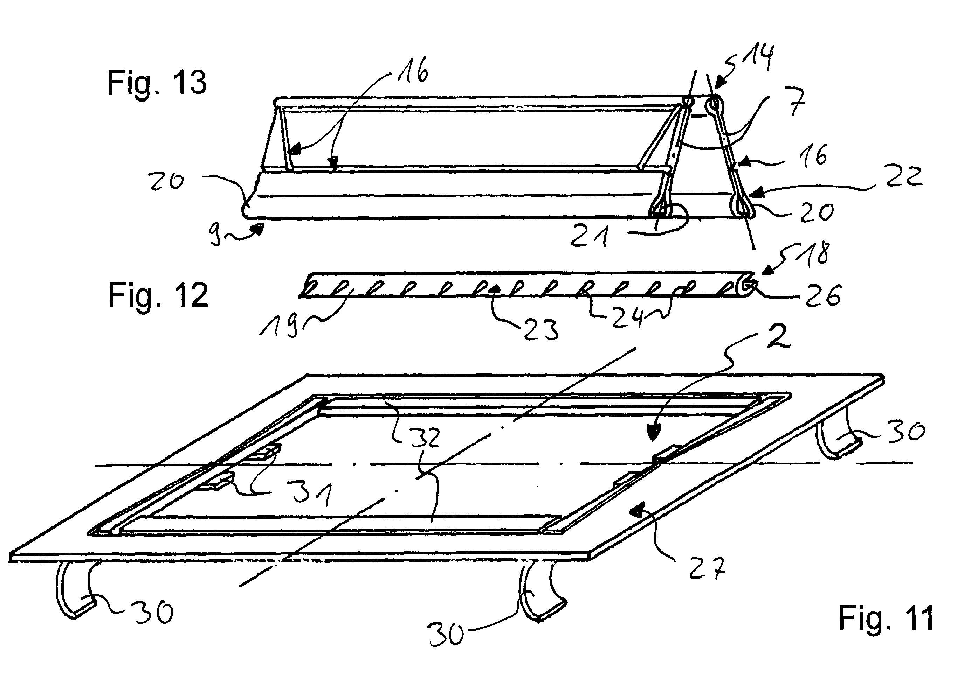

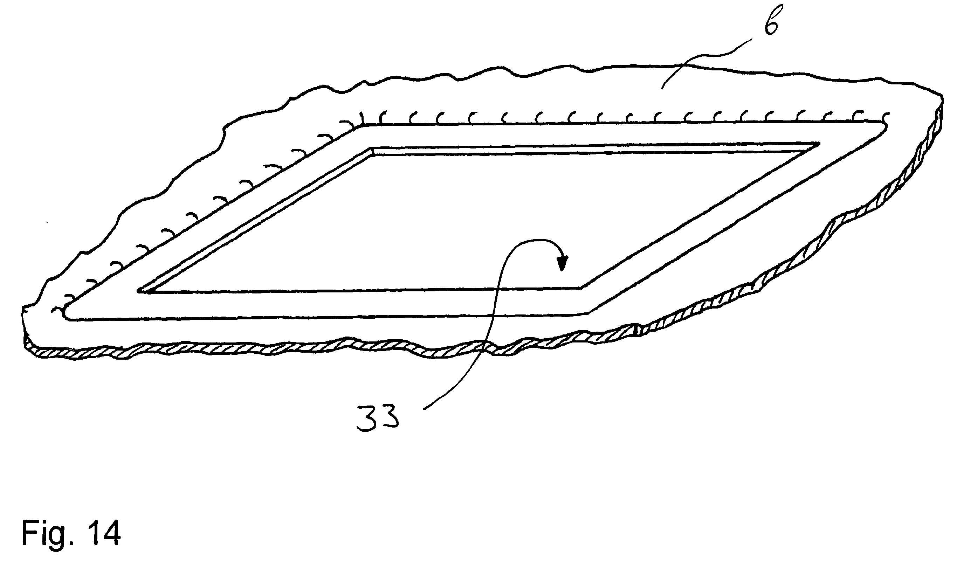

Die Fig. 11 zeigt den Hilfsrahmen 27 mit elastischen Abstandhaltern 30, Auflagen 31 und der Airbagaustrittsöffnung 2 zur Aufnahme der Airbagklappenträger 7. Auf zur Bildung der Knickstellen 16 eingekerbten und bei einer Zugbelastung der Airbagklappenträger 7 abknickende Flansche 32 werden die gesondert in der Fig. 12 dargestellten Leisten 19 mit ihren Spitzen oder Dornen 24 zum Befestigen des Gewebematerials 13 aufgesteckt. In der Fig. 13 sind die Airbagdeckel- oder -klappenträger 7 im nicht montierten Zustand gezeigt. Auch diese sind im Verformungsbereich 12 mit Kerben zur Bildung der Knickstellen 16 versehen, um bei Gewebezug abknicken zu können. Der Armaturentafelträger oder allgemein Innenverkleidungsträger 6 ist in der Fig. 14 ausschnittweise gezeigt, und zwar so, daß eine Aufnahmeöffnung 33 passend zum Hilfsrahmen 27 eine Öffnung.

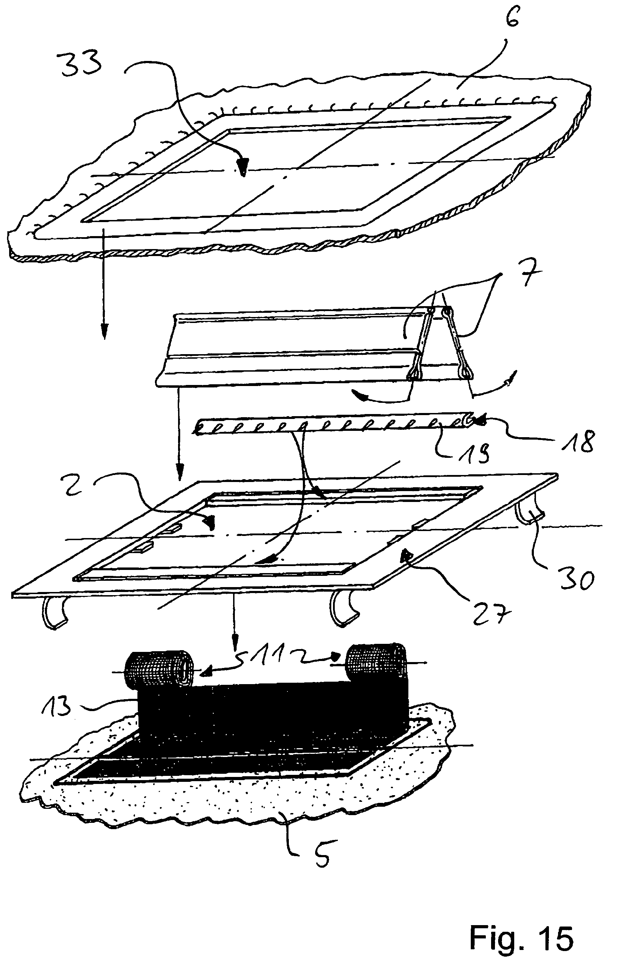

Die Fig. 15 zeigt die Montagereihenfolge der Komponenten von unten nach oben, wie sie in der Praxis auftritt. Die mit dem Gewebematerial 13 verbundene und mit Materialschwächungen 29 als Sollreißstelle eingeschnittene Folie der Sichtseitenschicht 5 wird in ein unteres Werkzeug (nicht gezeigt) eingelegt. Der Hilfsrahmen 27 wird lagepositioniert mit den vorher montierten Leisten 19 zur Befestigung des Gewebematerials 13 eingelegt. Beim Einschwenken der Airbagdeckelträger 7 klemmen diese das Gewebematerial 13 zwischen sich und den Leisten 19 unter zusätzlicher Fixierung durch die Spitzen oder Dorne 24 der Leiste 19 ein. Der in einem oberen Werkzeug (nicht gezeigt befestigte Innenverkleidungs- oder im vorliegenden Fall Armaturentafelträger 6 legt sich dann positioniert auf den Hilfsrahmen 27. Evtl. ist es vorteilhaft, dazwischen abzudichten.

Vorteilhaft ist die Aufteilung der Zugkräfte des Gewebematerials jeweils separat auf die Träger 6 und 7 und die Folie der Sichtseitenschicht 5. Hierdurch wird ein problemloses Öffnen der Airbagklappe(n) von einem Insassen weg hinter die Fahrzeuginnenverkleidung gewährleistet.

Die Erfindung ist anhand der Ausführungsbeispiele in der Beschreibung und in den Zeichnungen lediglich exemplarisch dargestellt und nicht darauf beschränkt, sondern umfaßt alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik insbesondere unter Einbeziehung der vollständigen Offenbarungsgehalte der am Anfang dieser Beschreibung angegebenen älteren Anmeldungen kombinieren kann. Insbesondere sind alle einzelnen Merkmale und Ausgestaltungsmöglichkeiten der Erfindung und ihrer Ausführungsbeispiele kombinierbar.

## Patentansprüche

1. Fahrzeuginnenverkleidung (1) mit einer Trägerstruktur (3), die von einer Schaumschicht (4) und darüber einer Sichtseitenschicht (5) bedeckt ist und einen Innenverkleidungsträger (6), in dem eine Airbagauslassöffnung (2) gebildet ist, und wenigstens einen in letzterer angeordneten Airbagklappenträger (7) enthält, der zumindest im wesentlichen formstabil ist und zusammen mit zugeordneten Bereichen der Schaumschicht (4) und Sichtseitenschicht (5) eine Airbagklappe (8) bildet, die eine Zugseite (9) aufweist, die einem Rand der Airbagauslassöffnung (2) benachbart angeordnet ist und an der eine Öffnungsmechanik (10) angreift, die mit dem Airbagklappenträger (7) zumindest an der Zugseite (9) und mit der Sichtseitenschicht (5) im Bereich des Airbagklappenträgers (7) fest verbundene Zugmittel (11) enthält, mittels denen die Airbagklappe (8) zum Freigeben der Airbagauslassöffnung (2) vom einem Fahrzeuginsassen weg auf der Zugseite (9) zumindest im wesentlichen hinter die Fahrzeuginnenverkleidung (1) ziehbar ist, **dadurch gekennzeichnet, dass** der Airbagklappenträger (7) auf seiner Zugseite (9) einen in Richtung hinter die Fahrzeuginnenverkleidung (1) verbiegbaren Verformungsbereich (12) enthält, und dass die Airbagklappe (8) und die Zugmittel (11) derart angeordnet und kombiniert sind, dass die Airbagklappe (8), wenn mittels der Zugmittel (11) daran gezogen wird, vollständig einschließlich des ihr zugeordneten Bereiches der Sichtseitenschicht (5) über ihre gesamte Umfangsform aus der Airbagauslassöffnung (2) gerissen und zumindest im wesentlichen hinter die Fahrzeuginnenverkleidung (1) gezogen wird.

2. Fahrzeuginnenverkleidung nach Anspruch 1, **dadurch gekennzeichnet, dass** die Zugmittel (11) durch Gewebematerial (13) gebildet sind, und/oder dass die Sichtseitenschicht (5) und/oder die Schaumschicht (4) entsprechend der Umfangsform der Airbagauslassöffnung (2) und/oder ggf. einzelner Airbagklappen (8) Materialschwächungen (29) enthält.

3. Fahrzeuginnenverkleidung nach Anspruch 1 oder 2, **dadurch gekennzeichnet, dass** die Zugmittel (11) und ggf. das Gewebematerial (13) an der Zugseite (9) des Airbagklappenträgers (7) mittels einer dort formschlüssig befestigten Leiste (19) fixiert sind.

4. Fahrzeuginnenverkleidung nach Anspruch 3, **dadurch gekennzeichnet, dass** die Leiste (19) auf die Zugseite (9) des Airbagklappenträgers (7) aufgeschnappt ist, und/oder dass die Zugmittel (11) und ggf. das Gewebematerial (13) mittels an der Leiste (19) vorgesehenen Dornen oder Haken (24), die in die Zugmittel (11) und ggf. das Gewebematerial (13) eingreifen und in der Zugseite (9) aufgenommen sind, fixiert sind.

5. Fahrzeuginnenverkleidung nach einem der vorhergehenden Ansprüche, **dadurch gekennzeichnet, dass** sich der Airbagklappenträger (7) auf seiner Zugseite (9) und/oder der seiner Zugseite (9) gegenüberliegenden Seite an einer benachbarten Seite der Airbagauslassöffnung (2) und/oder dass sich zwei Airbagklappenträger (7) an ihren einander gegenüberliegenden Seiten aneinander formschlüssig, vorzugsweise mittels einer Nut-und-Feder-Kombinationen (14) abstützen.

6. Fahrzeuginnenverkleidung nach einem der vorhergehenden Ansprüche, **dadurch gekennzeichnet, dass** sich der Airbagklappenträger (7) an seinen bezüglich seiner Zugseite (9) und der seiner Zugseite (9) gegenüberliegenden Seite übrigen Seiten vorzugsweise mittels Nasen (15) am Rand (25) der Airbagauslassöffnung (2) abstützt.

7. Fahrzeuginnenverkleidung nach einem der vorhergehenden Ansprüche, **dadurch gekennzeichnet, dass** die Airbagauslassöffnung (2) von einem Hilfsrahmen (27) umgeben ist, der in dem Innenverkleidungsträger (6) angeordnet ist und den wenigstens einen Airbagklappenträger (7) aufnimmt.

8. Fahrzeuginnenverkleidung nach Anspruch 7, **dadurch gekennzeichnet, dass** der Hilfsrahmen (27) mittels Abstandhaltern (30) bezüglich der Sichtseitenschicht (5) positioniert ist.

9. Fahrzeuginnenverkleidung nach einem der vorhergehenden Ansprüche, **dadurch gekennzeichnet, dass** der Innenverkleidungsträger (6) oder ggf. der Hilfsrahmen (27) im der Zugseite (9) des Airbagklappenträgers (7) benachbarten Bereich einen in Richtung hinter die Fahrzeuginnenverkleidung (1) verbiegbaren Verformungsbereich (12) enthält.

10. Fahrzeuginnenverkleidung nach einem der vorhergehenden Ansprüche, **dadurch gekennzeichnet, dass** der Verformungsbereich (12) wenigstens eine linienartige Materialdünnstelle (Knickstelle 16) oder einen gewellten oder zieharmonikaartigen Biegebereich (17) enthält.

11. Verfahren zum Öffnen einer Airbagklappe in einer Fahrzeuginnenverkleidung (1), wobei die Airbagklappe (8) zum Freigeben einer Airbagauslassöffnung (2) mittels Zugmitteln (11), die an einer Zugseite (9) eines Airbagklappenträgers (7) der Airbagklappe (8) angreifen, vom einem Fahrzeuginsassen weg auf der Zugseite (9) zumindest im wesentlichen hinter die Fahrzeuginnenverkleidung (1) gezogen wird, **dadurch gekennzeichnet, dass** der Airbagklappenträger (7) zu Beginn der Zugbewegung in deren Richtung von einem Rand der Airbagauslassöffnung (2) weg verformt wird, und dass daran anschließend die Airbagklappe (8) vollständig einschließlich des ihr zugeordneten Bereiches der Sichtseitenschicht (5) über ihre gesamte Umfangsform aus der Airbagauslassöffnung (2) gerissen und zumindest im wesentlichen hinter die Fahrzeuginnenverkleidung (1) gezogen wird.

12. Herstellungsverfahren für eine Fahrzeuginnenverkleidung (1) nach einem der Ansprüche 1 bis 10, mit wenigstens einer Airbagklappe (8) zum Verschließen und Freigeben einer Airbagauslassöffnung (2), wobei
- Zugmittel (11) mit der später nicht sichtbaren Seite einer Sichtseitenschicht (5) an einer Zugseite (9) davon und so verbunden werden, dass bei einem Ziehen an den Zugmitteln (11) die Sichtseitenschicht (5) zuverlässig vollständig zur Zugseite (9) mitgenommen wird,
- schäumendes Material darauf aufgebracht wird,
- ein Innenverkleidungsträger (6) oder ein in die Airbagauslassöffnung passender Hilfsrahmen (27) lagepositioniert auf das noch nicht ausgehärtete schäumende Material aufgesetzt wird,
- die Zugmittel (11) an Halteeinrichtungen (18) fixiert werden, die mit dem Innenverkleidungsträger (6) bzw. dem Hilfsrahmen (27) benachbart der Lage der Zugseite (9) verbunden sind,
- der Airbagklappenträger (7) unter gleichzeitiger Fixierung der Zugmittel (11) an der Zugseite (9) mit den Halteeinrichtungen (18) verbunden und lagepositioniert auf das noch nicht ausgehärtete schäumende Material so aufgesetzt wird, dass ein Verformungsbereich (12) des Airbagklappenträgers (7) auf der Zugseite (9) liegt, und
- das schäumende Material ausgehärtet wird.

13. Herstellungsverfahren nach Anspruch 12, **dadurch gekennzeichnet, dass** bei Verwendung eines in die Airbagauslassöffnung (2) passenden Hilfsrahmens (27) vor dem Aushärten des schäumenden Materials ein Innenverkleidungsträger (6) lagepositioniert auf das noch nicht ausgehärtete schäumende Material aufgesetzt wird, so dass der Hilfsrahmen (27) in der Airbagauslassöffnung liegt.

14. Herstellungsverfahren nach Anspruch 12 oder 13, **dadurch gekennzeichnet, daß** als Halteeinrichtungen (18) Leisten (19) mit Dornen oder Haken (24) zum Fixieren der Zugmittel (11) eingesetzt werden.

## Claims

1. Vehicle inner panel (1) with a support structure (3), which is covered by a foam layer (4) and, there-above, by a visible-side layer (5) and contains an inner panel support (6), in which an airbag outlet opening (2) is formed, and contains at least one airbag cover support (7), which is arranged in the latter, is at least substantially dimensionally stable and, together with associated regions of the foam layer (4) and visible-side layer (5), forms an airbag cover (8) which has a pulling side (9) which is arranged adjacent to an edge of the airbag outlet opening (2) and on which an opening mechanism (10) acts, the opening mechanism containing pulling means (11) which are fixedly connected to the airbag cover support (7) at least on the pulling side (9) and to the visible-side layer (5) in the region of the airbag cover support (7) and by means of which the airbag cover (8) can be pulled away from a vehicle occupant on the pulling side (9) and at least substantially behind the vehicle inner panel (1) in order to release the airbag outlet opening (2), **characterized in that** the airbag cover support (7), on its pulling side (9), contains a deformation region (12) which is bendable in the direction behind the vehicle inner panel (1), and **in that** the airbag cover (8) and the pulling means (11) are arranged and combined in such a manner that the airbag cover (8), when pulled by means of the pulling means (11), is completely torn over its entire circumferential shape, including that region of the visible-side layer (5) associated with it, out of the airbag outlet opening (2) and is at least substantially pulled behind the vehicle inner panel (1).

2. Vehicle inner panel according to Claim 1, **characterized in that** the pulling means (11) are formed by fabric material (13), and/or **in that** the visible-side layer (5) and/or the foam layer (4) contain and/or contains weakened material portions (29) corresponding to the circumferential shape of the airbag outlet opening (2) and/or, if appropriate, to individual airbag covers (8).

3. Vehicle inner panel according to Claim 1 or 2, **characterized in that** the pulling means (11) and, if appropriate, the fabric material (13) are fixed on the pulling side (9) of the airbag cover support (7) by means of a strip (19) fastened there in an interlocking manner.

4. Vehicle inner panel according to Claim 3, **characterized in that** the strip (19) is snapped onto the pulling side (9) of the airbag cover support (7), and/or **in that** the pulling means (11) and, if appropriate, the fabric material (13) are fixed by means of spikes or hooks (24) which are provided on the strip (19), engage in the pulling means (11) and, if appropriate, in the fabric material (13) and are accommodated in the pulling side (9).

5. Vehicle inner panel according to one of the preceding claims, **characterized in that** the airbag cover support (7) is supported on its pulling side (9) and/or on the side opposite its pulling side (9) on an adjacent side of the airbag outlet opening (2), and/or in that two airbag cover supports (7) are supported on each other on their mutually opposite sides in an interlocking manner, preferably by means of a tongue-and-groove combination (14).

6. Vehicle inner panel according to one of the preceding claims, **characterized in that** the airbag cover support (7) is supported on its remaining sides with regard to its pulling side (9) and the side opposite its pulling side (9) preferably by means of lugs (15) on the edge (25) of the airbag outlet opening (2).

7. Vehicle inner panel according to one of the preceding claims, **characterized in that** the airbag outlet opening (2) is surrounded by an auxiliary frame (27) which is arranged in the inner panel support (6) and accommodates the at least one airbag cover support (7).

8. Vehicle inner panel according to Claim 7, **characterized in that** the auxiliary frame (27) is positioned with regard to the visible-side layer (5) by means of spacers (30).

9. Vehicle inner panel according to one of the preceding claims, **characterized in that** the inner panel support (6) or, if appropriate, the auxiliary frame (27) contains, in the region adjacent to the pulling side (9) of the airbag cover support (7), a deformation region (12) which is bendable in the direction behind the vehicle inner panel (1).

10. Vehicle inner panel according to one of the preceding claims, **characterized in that** the deformation region (12) contains at least one linear thin material point (buckling point 16) or a wavy or concertina-like bending region (17).

11. Process for opening an airbag cover in a vehicle inner panel (1), the airbag cover (8) being pulled by means of pulling means (11), which act on a pulling side (9) of an airbag cover support (7) of the airbag cover (8), away from a vehicle occupant on the pulling side (9) and at least substantially behind the vehicle inner panel (1) in order to release an airbag outlet opening (2), **characterized in that** the airbag cover support (7) is deformed, at the beginning of the pulling movement, in the direction thereof away from an edge of the airbag outlet opening (2), and **in that**, subsequently thereto, the airbag cover (8) is completely torn over its entire circumferential shape, including that region of the visible-side layer (5) which is associated with it, out of the airbag outlet opening (2) and is pulled at least substantially behind the vehicle inner panel (1).

12. Process for manufacturing a vehicle inner panel (1) according to one of Claims 1 to 10, with at least one airbag cover (8) for closing and releasing an airbag outlet opening (2), wherein
- pulling means (11) are connected to that side of a visible-side layer (5) which is subsequently not visible, on a pulling side (9) thereof and in such a manner that, when there is pulling on the pulling means (11), the visible-side layer (5) is reliably completely carried along to the pulling side (9),
- foaming material is applied thereto,
- an inner panel support (6) or an auxiliary frame (27) fitting into the airbag outlet opening is placed in a certain position onto the foaming material which has not yet hardened,
- the pulling means (11) are fixed on holding devices (18) which are connected to the inner panel support (6) or to the auxiliary frame (27) adjacent to the position of the pulling side (9),
- the airbag cover support (7) is connected to the holding devices (18) with simultaneous fixing of the pulling means (11) to the pulling side (9), and is placed in a certain position onto the foaming material, which has not yet hardened, in such a manner that a deformation region (12) of the airbag cover support (7) lies on the pulling side (9), and
- the foaming material is hardened.

13. Manufacturing process according to Claim 12, **characterized in that**, when an auxiliary frame (27) fitting into the airbag outlet opening (2) is used, before the foaming material is hardened an inner panel support (6) is placed in a certain position onto the foaming material, which has not yet hardened, such that the auxiliary frame (27) lies in the airbag outlet opening.

14. Manufacturing process according to Claim 12 or 13, **characterized in that** strips (19) with spikes or hooks (24) for fixing the pulling means (11) are used as the holding devices (18).

## Revendications

1. Garniture intérieure de véhicule (1) comprenant une structure porteuse (3) qui est recouverte par une couche de mousse (4) et par dessus celle-ci une couche visible (5), et qui contient un support de garniture intérieure (6) dans lequel est formée une ouverture de sortie pour un airbag (2), et au moins un support de volet d'airbag (7) disposé dans cette dernière, qui est au moins substantiellement stable et forme conjointement avec des régions associées de la couche de mousse (4) et de la couche visible (5), un volet d'airbag (8), qui présente un côté de traction (9) qui est disposé à proximité d'un bord de l'ouverture de sortie d'airbag (2) et avec lequel vient en prise un mécanisme d'ouverture (10) qui contient des moyens de traction (11) connectés fixement au support de volet d'airbag (7) au moins au niveau du côté de traction (9) et à la couche visible (5) dans la région du support de volet d'airbag (7), au moyen desquels le volet d'airbag (8) peut être tiré pour libérer l'ouverture de sortie d'airbag (2) à l'écart d'un occupant du véhicule, du côté de traction (9) au moins essentiellement derrière la garniture intérieure du véhicule (1), **caractérisée en ce que** le support de volet d'airbag (7) contient sur son côté de traction (9) une région de déformation (12) pouvant être déformée dans la direction vers l'arrière de la garniture intérieure de véhicule (1), et **en ce que** le volet d'airbag (8) et les moyens de traction (11) sont disposés et combinés de telle sorte que le volet d'airbag (8), lorsqu'il est tiré par les moyens de traction (11), soit complètement déchiré avec la région qui lui est associée de la couche visible (5) sur toute sa forme périphérique, hors de l'ouverture de sortie d'airbag (2) et soit au moins substantiellement tiré vers l'arrière de la garniture intérieure de véhicule (1).

2. Garniture intérieure de véhicule selon la revendication 1, **caractérisée en ce que** les moyens de traction (11) sont formés par un matériau tissé (13), et/ou **en ce que** la couche visible (5) et/ou la couche de mousse (4) contient des affaiblissements de matière (29) correspondants à la forme périphérique de l'ouverture de sortie d'airbag (2) et/ou éventuellement de volets d'airbag individuels (8).

3. Garniture intérieure de véhicule selon la revendication 1 ou 2, **caractérisée en ce que** les moyens de traction (11) et éventuellement le matériau tissé (13) sont fixés sur le côté de traction (9) du support de volet d'airbag (7) au moyen d'une baguette (19) qui y est fixée par engagement par coopération de forme.

4. Garniture intérieure de véhicule selon la revendication 3, **caractérisée en ce que** la baguette (19) est encliquetée sur le côté de traction (9) du support de volet d'airbag (7), et/ou **en ce que** les moyens de traction (11) et éventuellement le matériau tissé (13) sont fixés au moyen de goujons ou de crochets (24) prévus sur la baguette (19), qui viennent en prise dans les moyens de traction (11) et éventuellement le matériau tissé (13) et qui sont reçus dans le côté de traction (9).

5. Garniture intérieure de véhicule selon l'une quelconque des revendications précédentes, **caractérisée en ce que** le support de volet d'airbag (7) s'appuie sur son côté de traction (9) et/ou sur le côté opposé à son côté de traction (9) contre un côté adjacent de l'ouverture de sortie d'airbag (2) et/ou **en ce que** deux supports de volet d'airbag (7) s'appuient sur leurs côtés mutuellement opposés, l'un contre l'autre par engagement par coopération de forme, de préférence au moyen d'une combinaison de rainure et clavette (14).

6. Garniture intérieure de véhicule selon l'une quelconque des revendications précédentes, **caractérisée en ce que** le support de volet d'airbag (7) s'appuie sur ses côtés restants, par rapport à son côté de traction (9) et au côté opposé à son côté de traction (9), de préférence au moyen d'ergots (15) sur le bord (25) de l'ouverture de sortie d'airbag (2).

7. Garniture intérieure de véhicule selon l'une quelconque des revendications précédentes, **caractérisée en ce que** l'ouverture de sortie d'airbag (2) est entourée par un cadre auxiliaire (27) qui est disposé dans le support de garniture intérieure (6) et qui reçoit l'au moins un support de volet d'airbag (7).

8. Garniture intérieure de véhicule selon la revendication 7, **caractérisée en ce que** le cadre auxiliaire (27) est positionné au moyen de dispositifs d'espacement (30) par rapport à la couche visible (5).

9. Garniture intérieure de véhicule selon l'une quelconque des revendications précédentes, **caractérisée en ce que** le support de garniture intérieure (6) ou éventuellement le cadre auxiliaire (27) contient, dans la région adjacente au côté de traction (9) du support de volet d'airbag (7), une région de déformation pouvant être déformée dans la direction vers l'arrière de la garniture intérieure de véhicule (1).

10. Garniture intérieure de véhicule selon l'une quelconque des revendications précédentes, **caractérisée en ce que** la région de déformation (12) contient au moins un point d'amincissement de matériau de type linéaire (point d'inflexion 16) ou une région de flexion ondulée ou en accordéon (17).

11. Procédé d'ouverture d'un volet d'airbag dans une garniture intérieure de véhicule (1), le volet d'airbag (8) étant tiré pour libérer une ouverture de sortie d'airbag (2) au moyen de moyens de traction (11) qui viennent en prise sur un côté de traction (9) d'un support de volet d'airbag (7) du volet d'airbag (8), à l'écart d'un occupant du véhicule du côté de traction (9) au moins essentiellement derrière la garniture intérieure du véhicule (1), **caractérisé en ce que** le support de volet d'airbag (7) est déformé au début du mouvement de traction dans sa direction l'écartant d'un bord de l'ouverture de sortie d'airbag (2), et **en ce qu'**ensuite le volet d'airbag (8) est complètement déchiré avec la région qui lui est associée de la couche visible (5) sur toute sa forme périphérique, hors de l'ouverture de sortie d'airbag (2) et est au moins substantiellement tiré vers l'arrière de la garniture intérieure de véhicule (1).

12. Procédé de fabrication d'une garniture intérieure de véhicule (1) selon l'une quelconque des revendications 1 à 10, comprenant au moins un volet d'airbag (8) pour fermer et libérer une ouverture de sortie d'airbag (2),
- des moyens de traction (11) étant connectés au côté ultérieurement non visible d'une couche visible (5) au niveau d'un côté de traction (9) de celle-ci, et de telle sorte que dans le cas d'une traction sur les moyens de traction (11), la couche visible (5) soit entraînée de manière fiable complètement vers le côté de traction (9),
- un matériau moussant étant appliqué par-dessus,
- un support de garniture intérieure (6) ou un cadre auxiliaire (27) s'ajustant dans l'ouverture de sortie d'airbag étant posé de manière assujettie en position sur le matériau moussant pas encore solidifié,
- les moyens de traction (11) étant fixés à des dispositifs de fixation (18), qui sont connectés au support de garniture intérieure (6) ou au cadre auxiliaire (27) à proximité de la position du côté de traction (9),
- le support de volet d'airbag (7) étant connecté avec fixation simultanée des moyens de traction (11) sur le côté de traction (9), aux dispositifs de fixation (18) et étant posé de manière assujettie en position sur le matériau moussant pas encore solidifié, de telle sorte qu'une région de déformation (12) du support de volet d'airbag (7) repose sur le côté de traction (9), et
- le matériau moussant étant solidifié.

13. Procédé de fabrication selon la revendication 12, **caractérisé en ce que** lors de l'utilisation d'un cadre auxiliaire (27) s'ajustant dans l'ouverture de sortie d'airbag (2) avant la solidification du matériau moussant, un support de garniture intérieure (6) est posé de manière assujettie en position sur le matériau moussant pas encore solidifié, de sorte que le cadre auxiliaire (27) se situe dans l'ouverture de sortie d'airbag.

14. Procédé de fabrication selon la revendication 12 ou 13, **caractérisé en ce que** l'on utilise comme dispositifs de fixation (18) des baguettes (19) avec des goujons ou des crochets (24) pour fixer les moyens de traction (11).
